# EUROPEAN PATENT SPECIFICATION

(11) **EP 3 751 113 B1**
(45) Date of publication and mention of the grant of the patent: **03.07.2024**
(21) Application number: 20176550.0
(22) Date of filing: 26.05.2020
(51) Int. Cl.: F02C 7/057, B64D 33/02, F02K 3/06

(54) **MITIGATION OF ADVERSE FLOW CONDITIONS IN A NACELLE INLET**
VERMINDERUNG VON UNGÜNSTIGEN STRÖMUNGSVERHÄLTNISSEN IN EINEM GONDELEINLASS
ATTÉNUATION DE CONDITIONS D'ÉCOULEMENT INDÉSIRABLES DANS UNE ENTRÉE DE NACELLE

(30) Priority: 10.06.2019 US 201916436293
(43) Date of publication of application: 16.12.2020
(73) Proprietor: The Boeing Company, Arlington, VA 22202 (US)
(72) Inventor: Hoisington, Charles Zachary, Chicago, IL Illinois 60606-1596 (US); Palacios Gutierrez, Francisco de Asis, Chicago, IL Illinois 60606-1596 (US); Brown, Eric David, Chicago, IL Illinois 60606-1596 (US)
(74) Representative: Witte, Weller & Partner Patentanwälte mbB

(56) References cited:
- EP-A2- 1 998 027
- EP-A2- 2 009 263
- US-A1- 2008 164 378
- US-A1- 2009 140 104
- US-A1- 2018 100 441

## Description

### Field

This disclosure relates to the field of turbofans, and in particular, to flow control for the leading lip of nacelles.

### Background

Turbofan engines are often employed in large commercial aircraft. As turbofans become larger and fans become wider, the nacelles that house the fans become shorter to achieve lower fuel burns (lower drag and weight). However, shorter nacelles, and especially the shorter inlets associated with shorter nacelles, means that adverse conditions such as high angles of attack (takeoff and over-rotation) or crosswind conditions can cause the flow to separate behind the leading edge of the inlet. A short inlet's smaller leading-edge radius, and other features associated with short inlets, makes it more difficult for the flow to stay attached when the airflow entering the engine turns before heading in a direction approximately normal to the fan face (e.g., the airflow turns due to a high angle of attack and/or due to a crosswind). If the flow separates at the leading-edge of the nacelle inlet, the resulting flow distortion (total pressure decrease) at the fan face is undesirable. The separated flow may reduce performance, increase noise, and necessitate the use of a heavier support structure to mitigate aerodynamically induced vibration. It is therefore desirable to provide solutions for inlet flow control to reduce the potential for flow separation at the leading-edge of the nacelle.

Document EP 2 009 263 A2, according to its abstract, states a turbofan flow delivery system including a fan case housing a fan. Flow exit guide vanes are arranged downstream from the fan and extend radially inwardly from the fan case toward a bypass flow path. A supply passage includes an opening provided in the fan case between the fan and flow exit guide vanes configured to selectively provide pressurized air to a component using air from the bypass flow path. Swirling air from the bypass flow path enters the supply passage and is converted to a static pressure.

Document EP 1 998 027 A2, according to its abstract, states a gas turbine engine provided with a nacelle having a hollow inner space. The inner space is utilized as a plenum for directing air from an inlet to an outlet at the upstream end of the nacelle to allow control of an effective lip width of the nacelle under certain flight conditions.

Document US 2009/0140104 A1, according to its abstract, states an aircraft turbojet nacelle comprising blowing means intended to inject a tangential airflow into the internal volume of the nacelle, said blowing means being provided in a wall of the air intake of the nacelle in the supersonic area of said air intake. The invention also concerns a method for controlling separation in an aircraft nacelle, wherein a tangential airflow is injected into the internal volume of the nacelle in the locally supersonic area of the air intake so as to pull the main airflow into the extension of the inner wall of the nacelle.

### Summary

An airflow proximate to leading edges of a turbofan nacelle inlet is ejected substantially normal to a fan face of the turbofan, creating suction proximate to the leading edge and mitigating flow separation proximate to the leading edge. Mitigating flow separation at the leading edge of the nacelle can improve the performance of the turbofan, especially in low speed operations. Also, mitigating the flow separation at the leading edge of the nacelle can reduce the noise generated by the turbofan due to flow disruption at the fan face, and further reduce stress generated on the turbofan due to flow distortion induced vibration in the turbofan.

One embodiment comprises a turbofan engine that includes a nacelle, a bypass fan, and a recirculation channel. Further, the turbofan engine comprises a scoop proximate to the recirculation channel inlet that is configured to extend into a bypass channel of the turbofan engine to direct an airflow in the bypass channel into the recirculation channel inlet, wherein the scoop is configured to retract away from the bypass channel. The recirculation channel is disposed within the nacelle and has a recirculation channel inlet downstream of a leading edge of the bypass fan. The recirculation channel has one or more recirculation channel outlets upstream of the bypass fan. The recirculation channel outlets are proximate to a leading edge of a nacelle inlet, and the recirculation channel outlets redirect an airflow from the recirculation channel towards an inside edge of the nacelle inlet to mitigate flow separation at the leading edge of the nacelle inlet.

Another embodiment comprises a method of operating a turbofan engine that utilizes airflow proximate to a leading edge of a nacelle to mitigate flow separation. The method comprises generating an airflow through a recirculation channel in a nacelle of a turbofan, where the recirculation channel has one or more recirculation channel outlets proximate to a leading edge of a nacelle inlet. The method further comprises directing the airflow exiting the recirculation channel outlets towards an inside edge of the nacelle inlet to mitigate flow separation at the leading edge of the nacelle inlet, wherein generating the airflow comprises directing an airflow in a bypass channel of the turbofan into at least one recirculation channel inlet using a scoop. The method further comprises modifying the airflow in the recirculation channel by extending the scoop into the bypass channel and retracting the scoop away from the bypass channel.

### Description of the Drawings

Some embodiments are now described, by way of example only, and with reference to the accompanying drawings. The same reference number represents the same element or the same type of element on all drawings.
FIG. 1 is a perspective view of a typical turbofan in the prior art.
FIG. 2 is a perspective view of an aircraft that utilizes turbofan engines that are enhanced to reduce flow separation in an illustrative embodiment.
FIG. 3 is a perspective view of the turbofan engine of FIG. 1 in an illustrative embodiment.
FIG. 4 is a cross-sectional view of the turbofan engine of FIG. 3 in an illustrative embodiment.
FIG. 5 is a view of a region of FIG. 4 in an illustrative embodiment.
FIG. 6 is a flow diagram of airflow at an inlet of the turbofan engine of FIG. 2 and an airflow in a recirculation channel in an illustrative embodiment.
FIGS. 7A - 7B illustrate comparisons of different nacelles in illustrative embodiments.
FIG. 8 is a view of the region of FIG. 4 in another illustrative embodiment.
FIG. 9 is a flow chart of a method of operating a turbofan engine that utilizes airflow proximate to a leading edge of a nacelle to mitigate flow separation in an illustrative embodiment.
FIGS. 10-16 illustrate additional details of the method of FIG. 9 in various illustrative embodiments.

### Detailed Description

The figures and the following description illustrate specific exemplary embodiments. It will be appreciated that those skilled in the art will be able to devise various arrangements that, although not explicitly described or shown herein, embody the principles described herein. Furthermore, any examples described herein are intended to aid in understanding the principles of the disclosure are to be construed as being without limitation. As a result, this disclosure is not limited to the specific embodiments or examples described below, but by the claims.

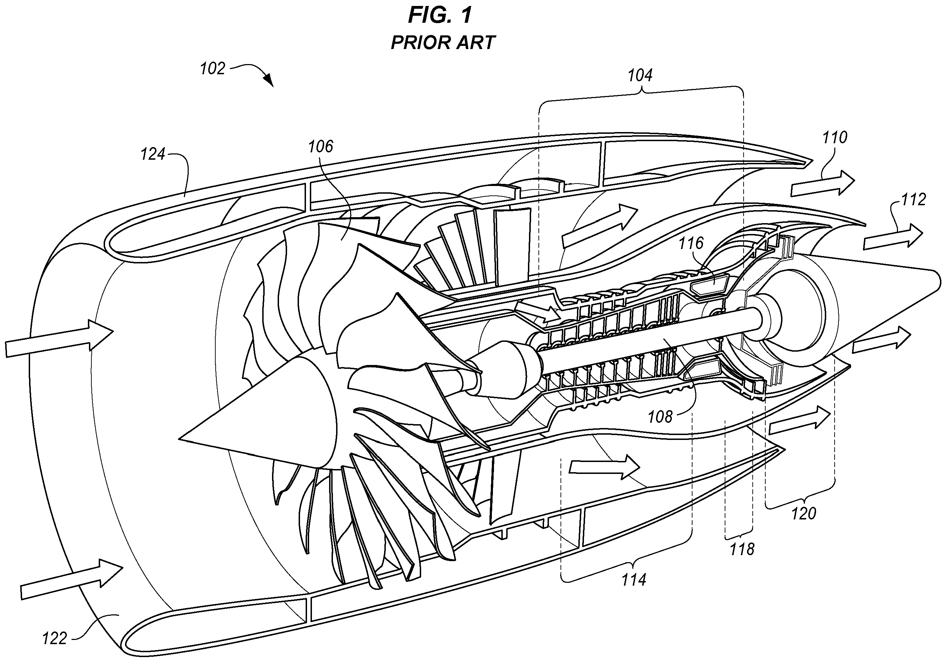

FIG. 1 is a perspective view of a typical turbofan 102 in the prior art. Turbofan 102 is a type of airbreathing jet engine that is widely used in aircraft propulsion. Turbofan 102 utilizes both a turbine and a fan together to generate thrust. In particular, a core engine 104 (e.g., the turbine portion of turbofan 102) and a bypass fan 106 (e.g., the fan portion of turbofan 102) are both attached to a common shaft 108. As fuel is burned in core engine 104, common shaft 108 rotates, which also rotates bypass fan 106. The rotation of bypass fan 106 generates high-speed jet 110, while the expanding hot gas from burning fuel generates low-speed jet 112. Both high-speed jet 110 and low-speed jet 112 contribute to the total thrust generated by turbofan 102.

The ratio of the mass-flow of air bypassing core engine 104 divided by the mass-flow of air passing through core engine 104 is referred to as the bypass ratio. Turbofan 102 produces thrust through a combination of these two portions working together. Engines that use more jet thrust relative to fan thrust are known as low-bypass ratio engines. Conversely, engines that have considerably more fan thrust than jet thrust are known as high-bypass ratio engines. Most commercial jet engines in use today are high-bypass ratio engines, while most fighter engines are low-bypass ratio engines. Turbofans were created to circumvent an awkward feature of turbojets, which was that they were inefficient in subsonic flight, which is where commercial jets operate today.

During operation, a portion of the incoming air into turbofan 102 enters compressor 114 of core engine, and is fed to a combustor 116 of core engine 104. Fuel is mixed with the compressed air, and is burned to spin high-pressure turbine 118 and common shaft 108. Mechanical energy is extracted from burning the fuel as the hot gasses generated by combustor 116 expand from high-pressure turbine 118 into low-pressure turbine 120 to generate low-speed jet 112. The rotation of common shaft 108 by high-pressure turbine 118 and low-pressure turbine 120 also spins bypass fan 106, thereby generating high-speed jet 110.

In some cases, it is difficult for the airflow entering turbofan 102 to stay attached to inlet surfaces of turbofan 102 when the airflow turns before heading in a direction approximately normal to the face of bypass fan 106 (e.g., the airflow turns due to a high angle of attack and/or due to a crosswind). If the flow separates at a leading edge 122 of nacelle 124 of turbofan 102, the resulting flow distortion (total pressure decrease) at the face of bypass fan 106 is undesirable. The separated flow may reduce performance, increase noise, and necessitate the use of a heavier support structure to mitigate aerodynamically induced vibration.

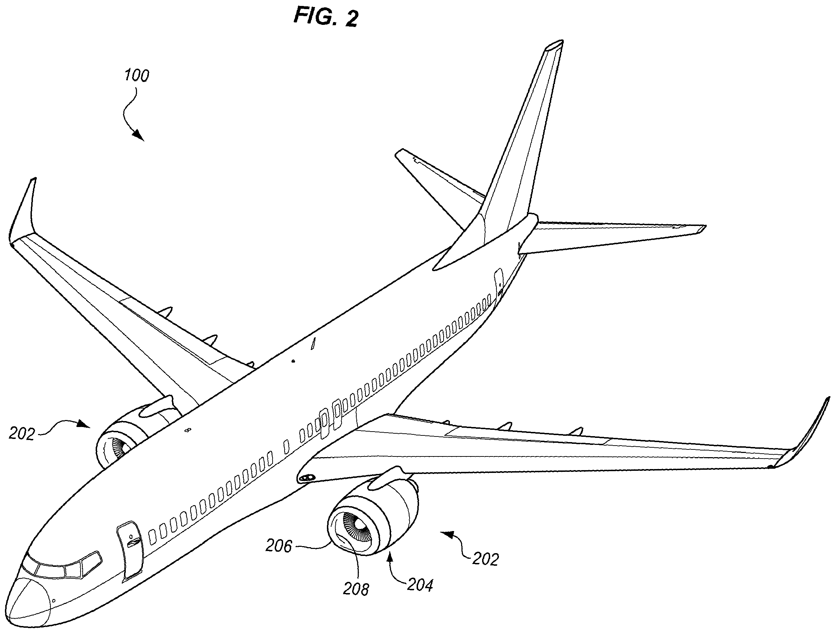

FIG. 2 is a perspective view of an aircraft 100 that utilizes turbofan engines 202 that are enhanced to reduce flow separation in an illustrative embodiment. In this embodiment, turbofan engines 202 utilize a high bypass ratio and also utilize nacelles 204 that are short, which are often employed to reduce drag and weight. However, the use of nacelles 204 that are short means that flow at a leading edge 206 of nacelles 204 may separate from leading edge 206, which is undesirable. In the embodiments described herein, turbofan engines 202 include a recirculation channel outlet 208 that is proximate to leading edge 206 of nacelle 204, which operates to ensure that the flow at leading edge 206 of nacelles 204 does not separate from leading edge 206. Recirculation channel outlet 208 operates to increase the performance of turbofan engines 202, decrease the noise generated by turbofan engines 202, and to mitigate aerodynamically induced vibration that is typically generated due to flow separations from leading edge 122 of nacelle 124 (see FIG. 1). In some embodiments, recirculation channel outlet 208 is continuous around an inside surface of an inlet of nacelle 204.

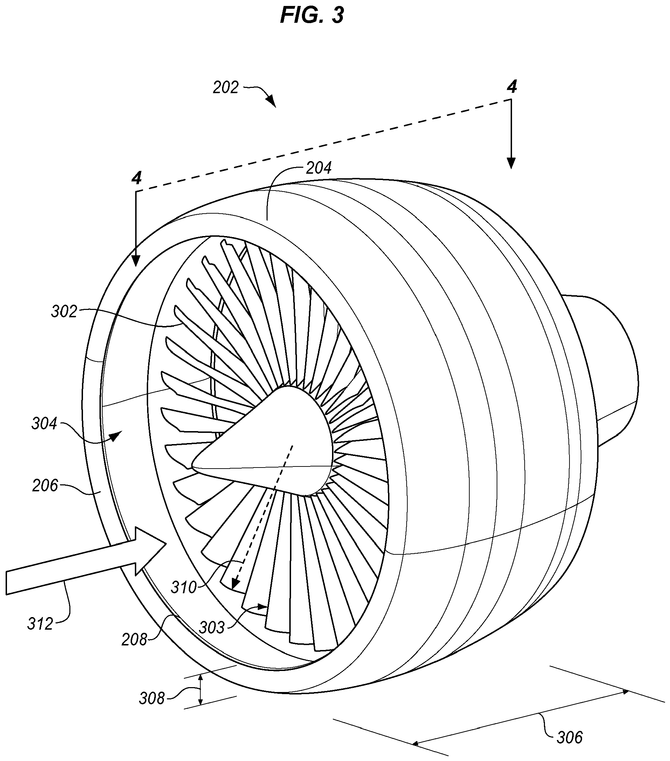

FIG. 3 is a perspective view of turbofan engine 202 in an illustrative embodiment. In this embodiment, turbofan engine 202 includes a bypass fan 302 having a leading edge 303, which powers an airflow from an interior portion of turbofan engine 202 that is ejected from recirculation channel outlet 208 proximate to leading edge 206 of nacelle 204. The airflow ejected from recirculation channel outlet 208 generates a suction proximate to leading edge 206 which operates to prevent an airflow 312 entering inlet 304 of nacelle 204 from separating from leading edge 206 of nacelle 204.

In this embodiment, bypass fan 302 is powered by a turbine core. However, in other embodiments, bypass fan 302 (also referred to as a fan in the other embodiments) is powered by an electric motor, a piston engine, and/or a shaft drive instead of and/or in addition to, a turbine core). Therefore, the advantages described herein for mitigating flow separation from leading edge 206 of nacelle 204 apply equally when bypass fan 302 is powered by other means than a turbine core.

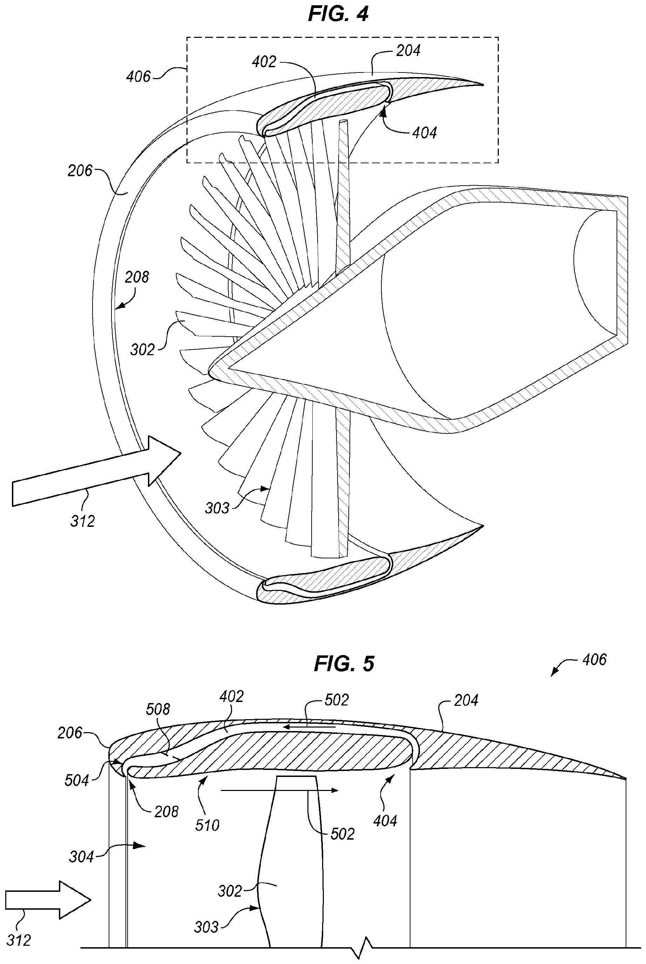

FIG. 4 is a cross-sectional view of turbofan engine 202 along cut lines 4-4 of FIG. 3 in an illustrative embodiment. In this embodiment, nacelle 204 includes a recirculation channel 402 having a recirculation channel inlet 404 downstream of leading edge 303 of bypass fan 302. Recirculation channel inlet 404 receives an airflow (not shown in this view) and directs the airflow into the recirculation channel 402. The airflow travels through recirculation channel 402 towards leading edge 206 of nacelle 204. This airflow exits recirculation channel outlet 208 proximate to leading edge 206, and is powered by the pressure differential across bypass fan 302 and/or by the bypass airflow generated by bypass fan 302.

FIG. 5 is a view of region 406 of FIG. 4 in an illustrative embodiment. FIG. 5 illustrates recirculation airflow 502, which is pressurized by bypass fan 302. Recirculation airflow 502 enters recirculation channel inlet 404, travels through recirculation channel 402 towards leading edge 206 of nacelle 204, and exits at recirculation channel outlet 208. In this embodiment, recirculation channel outlet 208 includes a curve 504 which directs recirculation airflow 502 back towards bypass fan 302 and away from leading edge 206. In particular, curve 504 substantially turns a direction of recirculation airflow 502 away from leading edge 206 and proximate to an inside edge 510 of inlet 304 of nacelle 204, thereby directing recirculation airflow 502 substantially normal to a face of bypass fan 302.

A suction is generated proximate to recirculation channel outlet 208 along inside edge 510, which helps to ensure that airflow 312 stays attached to inside edge 510 of inlet 304. In some embodiments, recirculation airflow 502 is split into multiple sections before exiting at the same or different location near leading edge 206 of nacelle. In some embodiments, vanes 508 within recirculation channel 402 add a rotational component (around a circumference of nacelle 204) to swirl recirculation airflow flow 502. In other embodiments, the mass-flow of recirculation airflow 502 and/or the pressure of recirculation airflow 502 is augmented with engine bleed air, an electric fan/pump, etc. Other embodiments pulse recirculation airflow 502 via passive or active mechanisms.

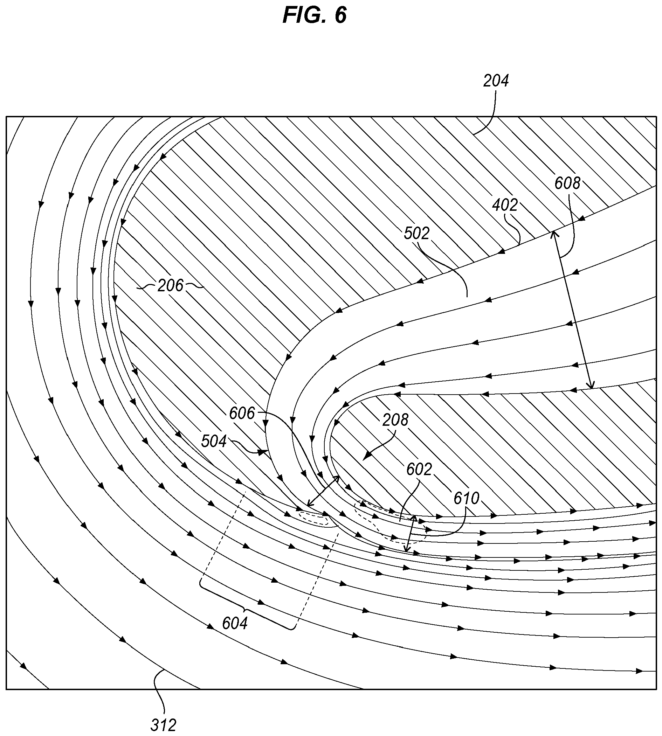

FIG. 6 is a flow diagram of airflow 312 at inlet 304 and recirculation airflow 502 in an illustrative embodiment. In FIG. 6, recirculation airflow 502 exits recirculation channel 402 near leading edge 206 of nacelle 204. Prior to exiting recirculation channel 402, recirculation airflow 502 travels around curve 504 to direct recirculation airflow 502 substantially normal to the fan face of bypass fan 302. A region of suction 602 is generated proximate to recirculation channel outlet 208 based on recirculation airflow 502. Low pressure in this region assists with turning airflow 312 around leading edge 206 of nacelle 204 to minimize flow separation 604 that forms just upstream of recirculation channel outlet 208.

A width 606 of recirculation channel outlet 208 can be used to control the mass-flow of recirculation airflow 502, where lower width generally reduces mass-flow recirculation airflow 502. Increasing a width 608 of recirculation channel 402 decreases the flow velocity in recirculation channel 402, decreasing the pressure losses, and also increasing mass-flow recirculation airflow 502. A width 606 of recirculation channel outlet 208 in this embodiment is less than a width 608 of recirculation channel 402. Downstream of recirculation channel outlet 208, region of suction 602 reduces the turning angle needed for airflow 312 that is turning around leading edge 206 of nacelle 204. This is because recirculation airflow 502 exiting recirculation channel outlet 208 forms a layer of air downstream of leading edge 206 of nacelle 204, effectively thickening recirculation airflow 502 from width 606 of recirculation channel outlet 208 to width 610 in region of suction 602.

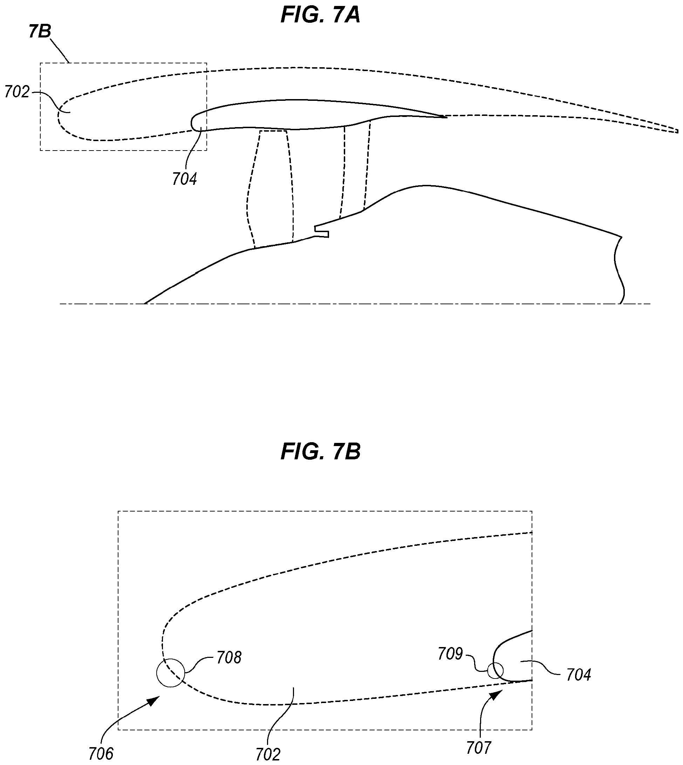

FIG. 7 illustrates a comparison of different nacelles in an illustrative embodiment. In particular, FIG. 7 illustrates how recirculation channel 402 allows for significantly shorter and thinner nacelles. Traditional nacelle 702 is near the limit of nacelle leading-edge thickness / fan diameter for maintaining attached flow during a 35-knot crosswind while still maintaining acceptable drag during cruise. Concept nacelle 704, using recirculation channel 402, is illustrated at the same fan diameter. With recirculation channel 402 missing or disabled, concept nacelle 704 is unable to maintain attached flow during static crosswind or over-rotation takeoff conditions. Both traditional nacelle 702 and concept nacelle 704 have similar radii of curvature at leading edges 706-707 proximate to regions 708-709. This is because both concepts are near the limit of having the lowest turning radius possible before flow separation, which results in a similar radius and similar supersonic speed of flow at static crosswind conditions. Downstream of regions 708-709, the use of recirculation channels 402 in traditional nacelle 702 and/or concept nacelle 704 enables a lower radius of curvature due to the technical effect generated by recirculation airflow 502.

Generally, an ideal shape of a leading-edge of a nacelle that utilizes recirculation channel 402 may be blunter than a traditional nacelle (e.g., if both were scaled to the same thickness). A nacelle designed with recirculation channel 402 is also blunter than a short nacelle that is designed to have separated flow during low-speed (e.g., on the ground) operations. For example, width 606 of recirculation channel outlet 208 (see FIG. 6) is 0.45% of a chord 306 of nacelle 204, 4.2% of a thickness 308 of nacelle 204, and 0.58% of a radius 310 of bypass fan 302 (see FIG. 3).

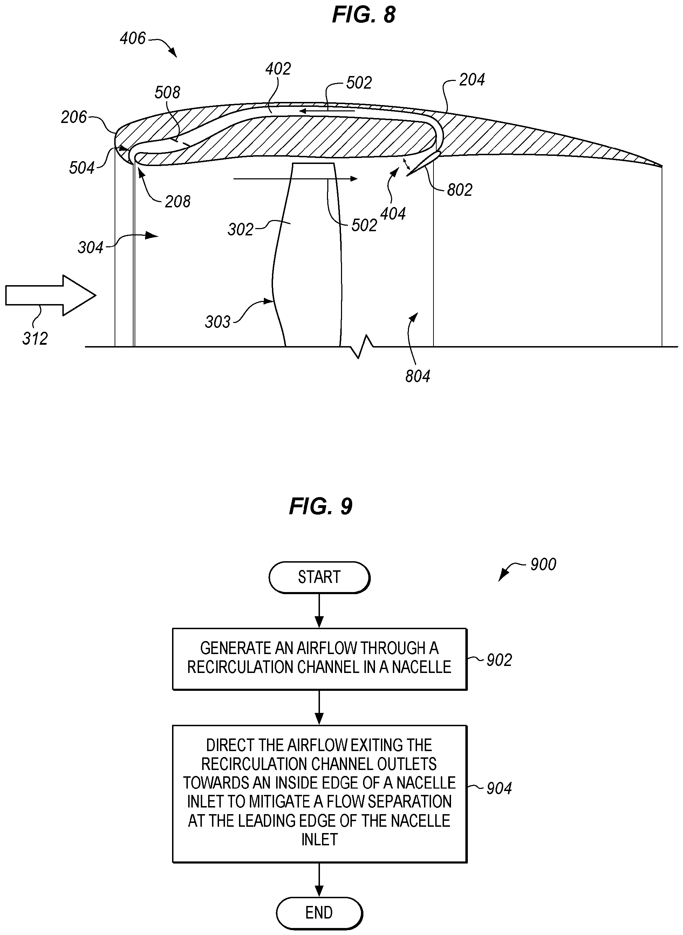

FIG. 8 is a view of region 406 of FIG. 4 in another illustrative embodiment. In this embodiment, a scoop 802 is located proximate to recirculation channel inlet 404. Scoop 802 is retractable in some embodiments. For example, scoop 802 extends into a bypass channel 804 formed downstream of leading edge 303 of bypass fan 302 during takeoff and landing to increase recirculation airflow 502. Scoop 802 retracts away from bypass channel 804 during cruise to decrease and/or eliminate recirculation airflow 502. During flight conditions other than takeoff and landing, it may be desirable to stop or reduce recirculation airflow 502 to reduce drag, reduce debris buildup within recirculation channel 402, or to improve the noise signature of turbofan engine 202. If scoop 802 is used, this may be accomplished by retracting scoop 802 out of bypass channel 804. If scoop 802 is not used, then recirculation channel outlet 208, recirculation channel inlet 404, and/or recirculation channel 402 may be mechanically blocked during cruise.

Recirculation channel 402 may be built into the fan case for bypass fan 302, or may pass around and/or over the fan case. Increasing width 608 of recirculation channel 402 (see FIG. 6) reduces the velocity of recirculation airflow 502, reduces the drag on recirculation channel 402, and increases the effectiveness of recirculation airflow 502. In some cases, the area between the fan case and an outer skin of nacelle 204 may be used for recirculation channel 402. Recirculation channel 402 may also include features that reduce the buildup of water and/or debris, such as drainage ports and particle separators.

Although recirculation channel outlet 208, recirculation channel 402, and recirculation channel inlet 404 have been illustrated as having a particular configuration, other embodiments may utilize other configurations as desired. For example, recirculation channel inlet 404 may be flush with bypass channel 804, or extend into bypass channel 804. Recirculation channel inlet 404 may have a fixed or variable geometry. Retractable doors (not shown) or other features may be used to start, stop, or modify recirculation airflow 502. Recirculation channel inlet 404 and/or recirculation channel outlet 208 may extend circumferentially around the interior of nacelle 204, or may be located at specific locations around the interior of nacelle 204. In some embodiments, the location of recirculation channel inlet 404 may be combined with a flow path that is used for thrust reversing. In other embodiments, the location of recirculation channel inlets 404 may be proximate to mechanisms used to vary the nozzle exit area of bypass fan 302.

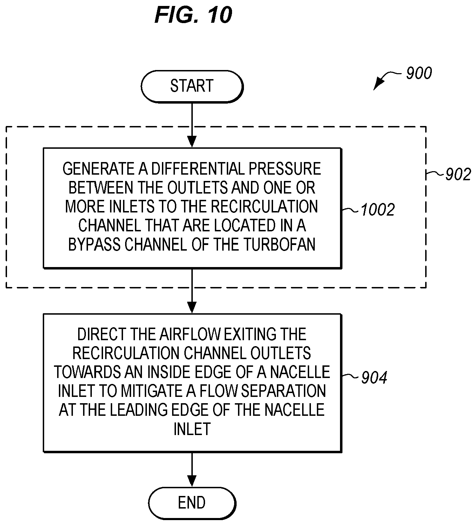

FIG. 9 is a flow chart of a method 900 of operating a turbofan engine that utilizes airflow proximate to a leading edge of a nacelle to mitigate flow separation in an illustrative embodiment. FIGS. 10-15 illustrate additional details of method 900 in various illustrative embodiments. Method 900 will be discussed with respect to turbofan engine 202 of aircraft 100, although method 900 may apply to other turbofan engines, not shown. The steps of method 900 may include other steps, not shown. Also, the steps may be performed in an alternate order.

Consider that aircraft 100 is ready to begin flight operations. Turbofan engines 202 are started, which generates recirculation airflow 502 through recirculation channel 402 (see FIG. 9, step 902). Recirculation airflow 502 travels through recirculation channel 402 towards leading edge 206 of nacelle 204, where recirculation airflow 502 exits recirculation channel outlet 208 and is directed by curve 504 towards inside edge 510 of inlet 304 of nacelle 204. As discussed previously, recirculation airflow 502 operates to mitigate flow separation along inside surface of inlet 304 of nacelle 204 (see FIG. 9, step 904 and FIG. 5).

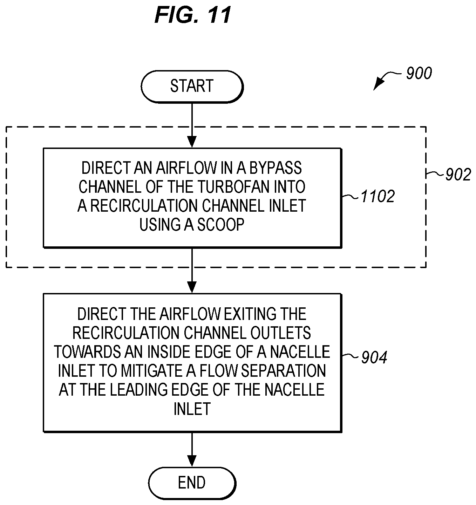

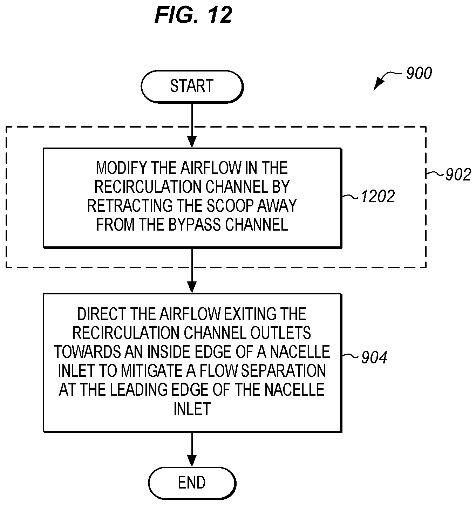

In some cases, recirculation airflow 502 is generated based on a differential pressure across bypass fan 302 (see FIG. 10, step 1002, and FIG. 5). In other cases, recirculation airflow 502 is generated based on the use of scoop 802, which directs the airflow in bypass channel 804 of turbofan engine 202 into recirculation channel inlets 404 (see FIG. 11, step 1102, and FIG. 8). Scoop 802, in some cases, is used to modify recirculation airflow 502 by extending into bypass channel 804 and retracting from bypass channel 804 (see FIG. 12, step 1202). Scoop 802, in some cases, covers recirculation channel inlet 404 when in the retracted position.

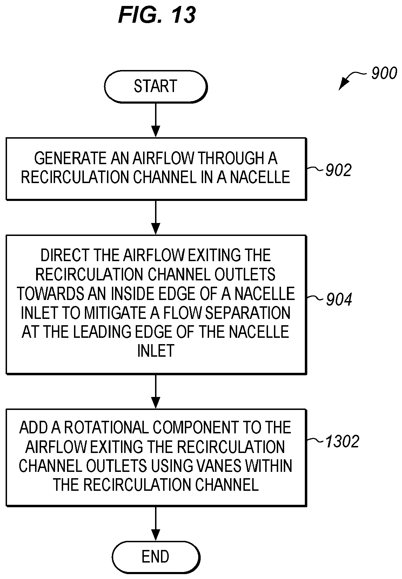

In some cases, vanes 508 are used to add a rotational component to recirculation airflow 502 (see FIG. 13, step 1302). The rotational component may be considered a swirl. This swirl may be clockwise or counter clockwise with respect to normal of the face of bypass fan 302. The swirl helps further mitigate flow separation in some cases.

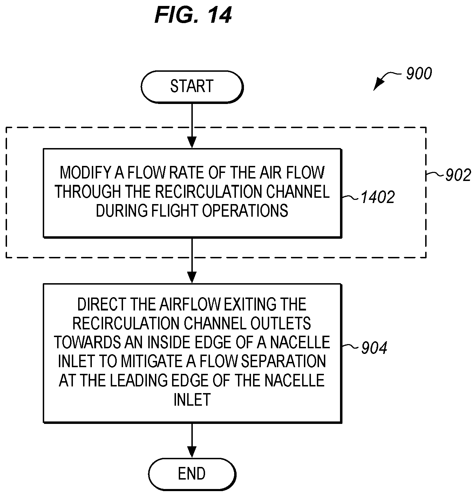

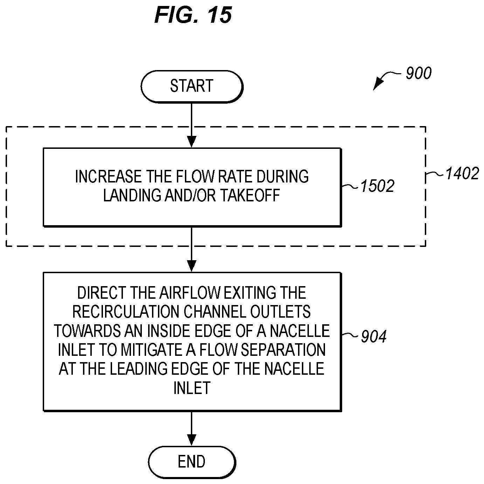

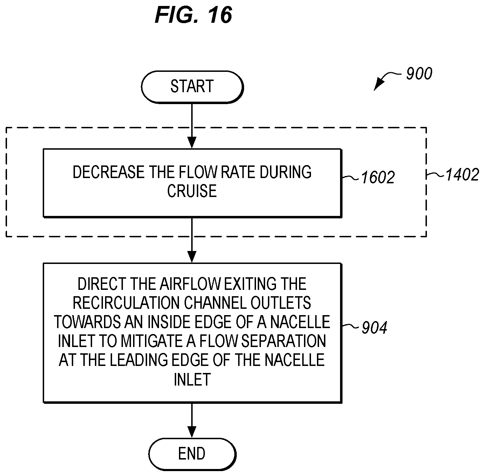

During flight operations for aircraft 100, it is desirable in some embodiments to modify a flow rate of recirculation airflow 502 (see FIG. 14, step 1402). For example, by increasing the flow rate during landing operations and/or takeoff operations (see FIG. 15, step 1502). Typically, flow separation is more likely during landing and takeoff, due to crosswind, over-rotation, etc. During cruise, flow separation is less likely. Therefore, it is desirable to reduce or terminate recirculation airflow 502 during cruse in some embodiments (see FIG. 16, step 1602), as this may slightly reduce the drag on turbofan engine 202.

The use of airflow ejection proximate to leading edges of turbofan inlets is capable of ensuring that flow attaches to the inlets during crosswind and/or over rotation, thereby improving the performance of the turbofan, reducing the noise generated by the turbofan, and further reducing aerodynamic vibration generated by the turbofans.

## Claims

1. A turbofan engine (202), comprising:
a nacelle (204);
a bypass fan (302);
a recirculation channel (402) disposed within the nacelle and having a recirculation channel inlet downstream of a leading edge (303) of the bypass fan (302) and one or more recirculation channel outlets upstream of the bypass fan (302); and
a scoop (802) proximate to the recirculation channel inlet that is configured to extend into a bypass channel (804) of the turbofan engine to direct an airflow in the bypass channel into the recirculation channel inlet, wherein the scoop (802) is configured to retract away from the bypass channel (804);
wherein the recirculation channel outlets are proximate to a leading edge (206) of a nacelle inlet,
wherein the recirculation channel outlets redirect an airflow from the recirculation channel towards an inside edge of the nacelle inlet to mitigate flow separation at the leading edge of the nacelle inlet.

2. The turbofan engine of claim 1, wherein:
the recirculation channel outlets (208) are disposed circumferentially around the inside edge (510) of the nacelle (204).

3. The turbofan engine of claim 2, wherein:
the recirculation channel outlets comprise a continuous outlet disposed circumferentially around the inside edge (510) of the nacelle (204).

4. The turbofan engine of claim 2 or 3, wherein:
the recirculation channel (402) includes vanes (508) that are configured to add a rotational component to the airflow exiting the recirculation channel outlets.

5. The turbofan engine of any of claims 1 to 4, wherein the scoop (802) is configured to cover the recirculation channel inlet (404) when in the retracted position.

6. The turbofan engine of any of claims 1 to 5, wherein the recirculation channel inlet (404) is flush with the bypass channel (804) or extends into the bypass channel (804).

7. The turbofan engine of any of claims 1 to 6, wherein:
the airflow exiting the recirculation channel outlets generates a suction proximate to, and downstream of, the recirculation channel outlets to mitigate the flow separation at the leading edge of the nacelle inlet.

8. A method (900) comprising:
generating (902) an airflow through a recirculation channel (402) in a nacelle (204) of a turbofan, the recirculation channel (402) having one or more recirculation channel outlets (208) proximate to a leading edge (206) of a nacelle inlet; and
directing (904) the airflow exiting the recirculation channel outlets towards an inside edge of the nacelle inlet mitigate flow separation at the leading edge (206) of the nacelle inlet, wherein generating the airflow comprises directing an airflow in a bypass channel (804) of the turbofan into at least one recirculation channel inlet using a scoop (802);
the method further comprising modifying the airflow in the recirculation channel by extending the scoop (802) into the bypass channel (804) and retracting the scoop (802) away from the bypass channel (804).

9. The method of claim 8, wherein generating the airflow comprises:
generating a pressure differential between the recirculation channel outlets and the at least one recirculation channel inlet that is located in the bypass channel (804) of the turbofan.

10. The method of claim 8 or 9, wherein the scoop (802) covers the recirculation channel inlet (404) when in the retracted position.

11. The method of any of claims 8 to 10, wherein the recirculation channel inlet (404) is flush with the bypass channel (804) or extends into the bypass channel (804).

12. The method of any of claims 8 to 11, further comprising:
adding a rotational component to the airflow exiting the recirculation channel outlets utilizing vanes (508) within the recirculation channel.

13. The method of any of claims 8 to 12, wherein generating the airflow comprises:
modifying a flow rate of the airflow through the recirculation channel during flight operations.

14. The method of claim 13, wherein modifying the flow rate further comprises:
increasing the flow rate during landing and takeoff.

15. The method of claim 13 or 14, wherein modifying the flow rate further comprises:
decreasing the flow rate during cruise.

## Patentansprüche

1. Turbofan-Triebwerk (202), aufweisend:
eine Gondel (204);
einen Bypass-Fan (302);
einen Rezirkulationskanal (402), angeordnet in der Gondel und aufweisend einen Rezirkulationskanal-Einlass stromabwärts einer führenden Kante (303) des Bypass-Lüfters (302) und einen oder mehrere Rezirkulationskanal-Auslässe stromaufwärts des Bypass-Lüfters (302); und
eine Schaufel (802), nah gelegen zum Rezirkulationskanal-Einlass, die konfiguriert ist, sich in einen Bypass-Kanal (804) des Turbofan-Triebwerks zu erstrecken, um einen Luftstrom im Bypass-Kanal in den Rezirkulationskanal-Einlass zu leiten, wobei die Schaufel (802) konfiguriert ist, sich vom Bypass-Kanal (804) zurückzuziehen;
wobei die Rezirkulationskanal-Auslässe nah gelegen zu einer führenden Kante (206) eines Gondel-Einlasses sind,
wobei die Rezirkulationskanal-Auslässe einen Luftstrom von dem Rezirkulationskanal in Richtung einer Innenkante des Gondel-Einlasses umleiten, um die Strömungsablösung an der führenden Kante des Gondel-Einlasses zu mildern.

2. Turbofan-Triebwerk nach Anspruch 1, wobei:
die Rezirkulationskanal-Auslässe (208) in Umfangsrichtung um die Innenkante (510) der Gondel (204) angeordnet sind.

3. Turbofan-Triebwerk nach Anspruch 2, wobei:
die Rezirkulationskanal-Auslässe einen kontinuierlichen Auslass aufweisen, der in Umfangsrichtung um die Innenkante (510) der Gondel (204) angeordnet ist.

4. Turbofan-Triebwerk nach Anspruch 2 oder 3, wobei:
der Rezirkulationskanal (402) Schaufeln (508) enthält, die konfiguriert sind, eine Rotationskomponente zum Luftstrom hinzuzufügen, der die Rezirkulationskanal-Auslässe verlässt.

5. Turbofan-Triebwerk nach einem der Ansprüche 1 bis 4, wobei die Schaufel (802) konfiguriert ist, den Rezirkulationskanal-Einlass (404) in der eingefahrenen Position zu überdecken.

6. Turbofan-Triebwerk nach einem der Ansprüche 1 bis 5, wobei der Rezirkulationskanal-Einlass (404) bündig mit dem Bypass-Kanal (804) ist oder in den Bypass-Kanal (804) hineinragt.

7. Turbofan-Triebwerk nach einem der Ansprüche 1 bis 6, wobei:
der Luftstrom, der die Rezirkulationskanal-Auslässe verlässt, eine Saugwirkung in der Nähe und stromabwärts der Rezirkulationskanal-Auslässe erzeugt, um die Strömungsablösung an der führenden Kante des Gondel-Einlasses zu mildern.

8. Verfahren (900), aufweisend:
Erzeugen (902) eines Luftstroms durch einen Rezirkulationskanal (402) in einer Gondel (204) eines Turbofans, wobei der Rezirkulationskanal (402) einen oder mehrere Rezirkulationskanal-Auslässe (208) nahe einer führenden Kante (206) eines Gondel-Einlasses aufweist; und
Lenken (904) des Luftstroms, der die Rezirkulationskanal-Auslässe verlässt, in Richtung einer Innenkante des Gondel-Einlasses, um die Strömungsablösung an der führenden Kante (206) des Gondel-Einlasses abzuschwächen, wobei das Erzeugen des Luftstroms das Lenken eines Luftstroms in einem Bypass-Kanal (804) des Turbofans in mindestens einen Rezirkulationskanal-Einlass unter Verwendung einer Schaufel (802) aufweist;
das Verfahren des Weiteren das Modifizieren des Luftstroms in dem Rezirkulationskanal durch das Ausfahren der Schaufel (802) in den Bypass-Kanal (804) und das Zurückziehen der Schaufel (802) von dem Bypass-Kanal (804) auweist.

9. Verfahren nach Anspruch 8, wobei das Erzeugen des Luftstroms aufweist:
Erzeugen eines Druckunterschieds zwischen den Rezirkulationskanal-Auslässen und mindestens einem Rezirkulationskanal-Einlass, der sich im Bypass-Kanal (804) des Turbofans befindet.

10. Verfahren nach Anspruch 8 oder 9, wobei die Schaufel (802) den Rezirkulationskanal-Einlass (404) in der eingefahrenen Position überdeckt.

11. Verfahren nach einem der Ansprüche 8 bis 10, wobei der Rezirkulationskanal-Einlass (404) bündig mit dem Bypass-Kanal (804) ist oder in den Bypass-Kanal (804) hineinragt.

12. Verfahren nach einem der Ansprüche 8 bis 11, des Weiteren aufweisend:
Hinzufügen einer Rotationskomponente zu dem Luftstrom, der die Rezirkulationskanal-Auslässe verlässt, unter Verwendung von Schaufeln (508) innerhalb des Rezirkulationskanals.

13. Verfahren nach einem der Ansprüche 8 bis 12, wobei das Erzeugen des Luftstroms aufweist:
Modifizieren der Durchflussrate des Luftstroms durch den Rezirkulationskanal während des Flugbetriebs.

14. Verfahren nach Anspruch 13, wobei das Modifizieren der Durchflussrate des Weiteren aufweist:
Erhöhen der Durchflussrate während Landung und Start.

15. Verfahren nach Anspruch 13 oder 14, wobei das Modifizieren der Durchflussrate des Weiteren aufweist:
Verringern der Durchflussrate während des Reiseflugs.

## Revendications

1. Moteur turboréacteur (202), comprenant :
une nacelle (204) ;
une soufflante de dérivation (302) ;
un canal de recirculation (402) disposé à l'intérieur de la nacelle et ayant une entrée de canal de recirculation en aval d'un bord d'attaque (303) de la soufflante de dérivation (302) et une ou plusieurs sorties de canal de recirculation en amont de la soufflante de dérivation (302) ; et
une prise d'air (802) à proximité de l'entrée de canal de recirculation, qui est configurée pour s'étendre dans un canal de dérivation (804) du moteur turboréacteur pour orienter un écoulement d'air, s'écoulant dans le canal de dérivation, dans l'entrée de canal de recirculation, dans lequel la prise d'air (802) est configurée pour se rétracter à l'opposé du canal de dérivation (804) ;
dans lequel les sorties de canal de recirculation sont à proximité d'un bord d'attaque (206) d'une entrée de nacelle,
dans lequel les sorties de canal de recirculation réorientent un écoulement d'air, depuis le canal de recirculation, vers un bord intérieur de l'entrée de nacelle pour mitiger un décollement d'écoulement au bord d'attaque de l'entrée de nacelle.

2. Moteur turboréacteur selon la revendication 1, dans lequel :
les sorties de canal de recirculation (208) sont disposées circonférentiellement autour du bord intérieur (510) de la nacelle (204).

3. Moteur turboréacteur selon la revendication 2, dans lequel :
les sorties de canal de recirculation comprennent une sortie continue disposée circonférentiellement autour du bord intérieur (510) de la nacelle (204).

4. Moteur turboréacteur selon la revendication 2 ou 3, dans lequel :
le canal de recirculation (402) inclut des aubes (508) qui sont configurées pour ajouter une composante rotationnelle à l'écoulement d'air sortant des sorties de canal de recirculation.

5. Moteur turboréacteur selon l'une quelconque des revendications 1 à 4, dans lequel la prise d'air (802) est configurée pour couvrir l'entrée de canal de recirculation (404) lorsqu'elle est dans la position rétractée.

6. Moteur turboréacteur selon l'une quelconque des revendications 1 à 5, dans lequel l'entrée de canal de recirculation (404) est au ras du canal de dérivation (804) ou s'étend dans le canal de dérivation (804).

7. Moteur turboréacteur selon l'une quelconque des revendications 1 à 6, dans lequel :
l'écoulement d'air sortant des sorties de canal de recirculation génère une aspiration à proximité, et en aval, des sorties de canal de recirculation pour mitiger le décollement d'écoulement au bord d'attaque de l'entrée de nacelle.

8. Procédé (900), comprenant :
la génération (902) d'un écoulement d'air à travers un canal de recirculation (402) dans une nacelle (204) d'un turboréacteur, le canal de recirculation (402) ayant une ou plusieurs sorties de canal de recirculation (208) à proximité d'un bord d'attaque (206) d'une entrée de nacelle ; et
l'orientation (904) de l'écoulement d'air sortant des sorties de canal de recirculation vers un bord intérieur de l'entrée de nacelle pour mitiger un décollement d'écoulement au bord d'attaque (206) de l'entrée de nacelle, dans lequel la génération de l'écoulement d'air comprend l'orientation d'un écoulement d'air, s'écoulant dans un canal de dérivation (804) du turboréacteur, dans au moins une entrée de canal de recirculation en utilisant une prise d'air (802) ;
le procédé comprenant en outre la modification de l'écoulement d'air dans le canal de recirculation, en étendant la prise d'air (802) dans le canal de dérivation (804) et rétractant la prise d'air (802) à l'opposé du canal de dérivation (804).

9. Procédé selon la revendication 8, dans lequel la génération de l'écoulement d'air comprend :
la génération d'une pression différentielle entre les sorties de canal de recirculation et l'au moins une entrée de canal de recirculation qui est située dans le canal de dérivation (804) du turboréacteur.

10. Procédé selon la revendication 8 ou 9, dans lequel la prise d'air (802) couvre l'entrée de canal de recirculation (404) lorsqu'elle est dans la position rétractée.

11. Procédé selon l'une quelconque des revendications 8 à 10, dans lequel l'entrée de canal de recirculation (404) est au ras du canal de dérivation (804) ou s'étend dans le canal de dérivation (804).

12. Procédé selon l'une quelconque des revendications 8 à 11, comprenant en outre :
l'ajout d'une composante rotationnelle à l'écoulement d'air sortant des sorties de canal de recirculation en utilisant des aubes (508) à l'intérieur du canal de recirculation.

13. Procédé selon l'une quelconque des revendications 8 à 12, dans lequel la génération de l'écoulement d'air comprend :
la modification d'un débit d'écoulement de l'écoulement d'air à travers le canal de recirculation durant des opérations de vol.

14. Procédé selon la revendication 13, dans lequel la modification du débit d'écoulement comprend en outre :
l'augmentation du débit d'écoulement durant l'atterrissage et le décollage.

15. Procédé selon la revendication 13 ou 14, dans lequel la modification du débit d'écoulement comprend en outre :
la réduction du débit d'écoulement durant le vol en croisière.
